# EUROPEAN PATENT APPLICATION

(11) **EP 1 612 189 A1**
(43) Date of publication of application: **04.01.2006**
(21) Application number: 04015575.6
(22) Date of filing: 02.07.2004
(51) Int. Cl.: C01G 23/07, C01G 23/047

(54) **Nanostructured titanium dioxide films having low optical gap and a process for the preparation thereof**

(71) Applicant: Tethis S.r.l., 20122 Milano (IT)
(72) Inventor: Barborini, Emanuele, c/o INFM-UdR Milano Univ., 20133 Milano (IT); Milani, Paolo, c/o INFM-UdR Milano Univ., 20133 Milano (IT); Piseri, Paolo Giuseppe Carlo, Via Celoria, 16 20133 Milano (IT)
(74) Representative: Minoja, Fabrizio

(57) **Abstract**

The invention discloses a simple and economic thermal treatment in air allowing to obtain nanostructured TiO₂ film with an optical gap substantially close to 2 eV. This is achieved by the use of a cluster-assembled TiO₂ film obtained by supersonic cluster beam deposition. This system is characterized by a highly porous and defective structure allowing the efficient incorporation, during thermal treatment, of carbon containing volatile molecules present in air. Substitutional carbon atoms modify the electronic structure of TiO₂ nanoparticles, causing the narrowing of the optical gap in the range of visible wavelength. The thermal treatment does not destroy the nanostructure of the as-deposited films.

## Description

The present invention refers to a Titanium Dioxide materials characterized by an optical gap lower than 2.1 eV, to a process for their preparation as well as to photocatalysts comprising said materials.

### Background of the invention

Nanostructured transition metal oxides (ns-TMO) are of strategic importance for applications in the field of photocatalysis, optics, solar energy conversion, gas sensing, energy production and storage¹.

Among ns-TMO, nanostructured titanium dioxide (ns-TiO₂) is one of the most studied since many decades due to its versatility for a variety of applications. Despite the conspicuous bibliography on ns-TiO₂ a fundamental comprehension and control of the interplay between nanostructure, stoichiometry and crystalline structure is still lacking².

Since the report of the photocatalytic splitting of water using rutile TiO₂ electrodes by Fujishima and Honda in 1972³, the interest for TiO₂ as a strategic material for environmental photocatalysis and photoelectrochemical solar energy conversion has continuously grown^{4,5}. In recent years the renewed attention on hydrogen as an alternative to fossil fuels, has addressed the problem about its large-scale production with environmentally benign processes⁶. A fascinating solution could be the photocatalytic splitting of water on suitable nanostructured TiO₂ based catalyst by solar irradiation^{7,8}.

The photocatalytic effect in solid state catalysts occurs when an exciton, the electron-hole pair created by photon absorption, can interact with molecules close to the catalyst surface. Due to the wide optical gap of TiO₂ most common polymorphic forms (3.0 eV for rutile and 3.2 eV for anatase)⁹, exciton creation is achievable only by UV radiation absorption, thus rendering the use of solar irradiation impractical. The catalytic activity is also profoundly affected by the nanostructure of the catalysts. Due to the magnification of surface effects, nanocrystalline materials present radically different and generally improved catalytic properties compared to their bulk counterpart ¹⁰. For these reasons many efforts have been concentrated towards the optical band gap narrowing of nanocrystalline titania¹¹.

Several strategies have been proposed to narrow the TiO₂ energy gap exploiting the doping with metallic and non-metallic atoms. Transition metal-doped TiO₂ has shown thermal instability causing atomic diffusion and an increase of carrier-recombination centres¹². Non-metallic atoms seem better candidates due to their ability to generate strong covalent chemical bonding with titanium. Calculations showing the modification of the valence and conduction band density of states (DOS) of TiO₂ with the formation of new states in the gap have been carried out for F, N, C, S, P as dopants¹³. In particular, carbon-doped TiO₂ has been indicated as one of the best in terms of energy gap narrowing. Experimentally, the narrowing of the energy gap has been demonstrated in microcrystalline TiO₂ films doped with N, C, and S¹²⁻¹⁴.

Using the oxidation in air of a titanium foil by an acetylene flame, Khan and co-workers¹⁴ produced a C doped microcrystalline TiO₂ film with an optical gap of 2.32 eV. The XRD analysis of this system indicates that a considerable metal fraction is still present in the sample, suggesting that titanium oxidation and doping are not uniform on the whole sample.

More recently, EP 1400491 disclosed Titanium Dioxide fine particles doped with at least two elements selected from carbon, nitrogen, hydrogen and sulphur. Said particles are reported to show an increased photocatalytic activity in the region of the visible wavelength.

### Description of the invention

It has now been found that a titanium dioxide material having an optical gap substantially lower than that known until now may be obtained by doping a highly porous crystalline TiO₂ exclusively with Carbon atoms, preferably using a particular technology allowing the preparation of a starting material having the desired porosity and an high number of defects in the crystal lattice.

### Brief description of the Figures

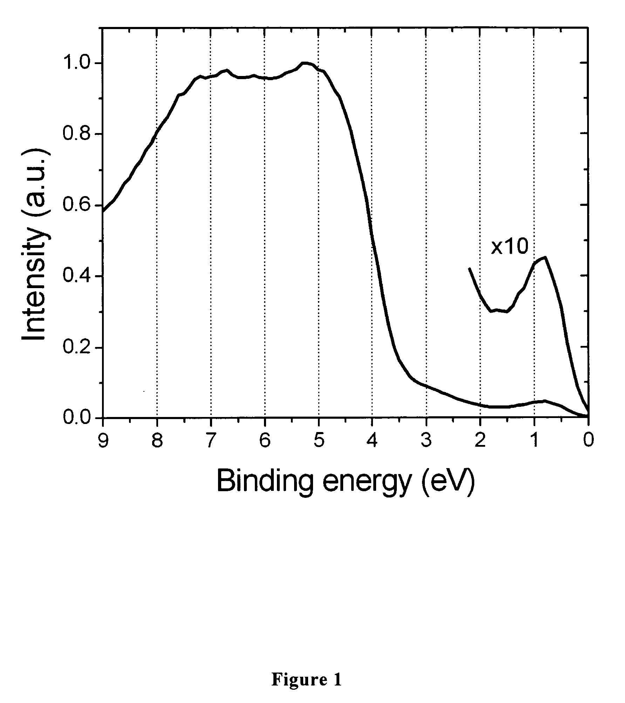

**Figure 1**. UPS spectrum excited by He I photons (21.2 eV) of as deposited ns-TiO₂. The peak at about 0.8 eV indicates the consistent presence of oxygen vacancy Ti³⁺ defects. The abundance in these states is essential for the efficient chemisorption of organic molecules, as required to ensure carbon precursors for the carbothermal doping of ns-TiO₂. The main structure of VB between 3 and 9 eV is due to O 2p orbital.

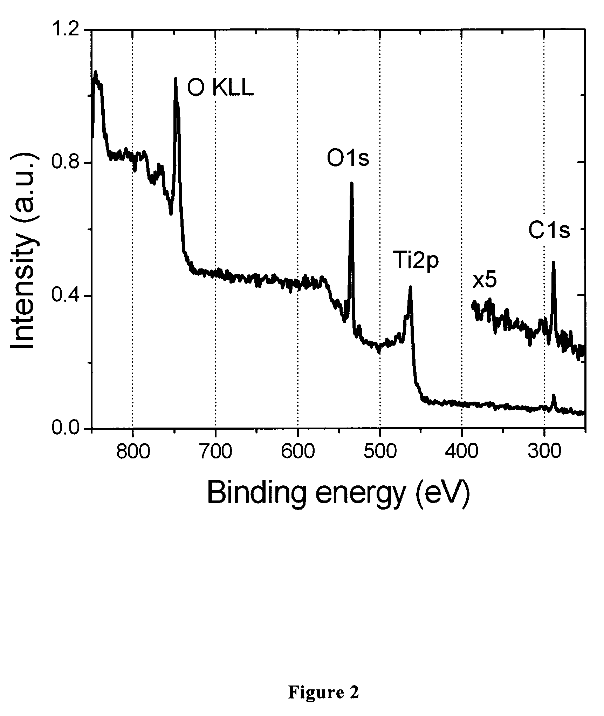

**Figure 2.** Wide-scan XPS spectrum of ns-TiO₂ after 1000°C annealing indicating the presence of titanium, oxygen, and carbon, only. The measurement has been collected after a severe argon ion beam etching of the sample in order to remove contribution from topmost surface adsorbates.

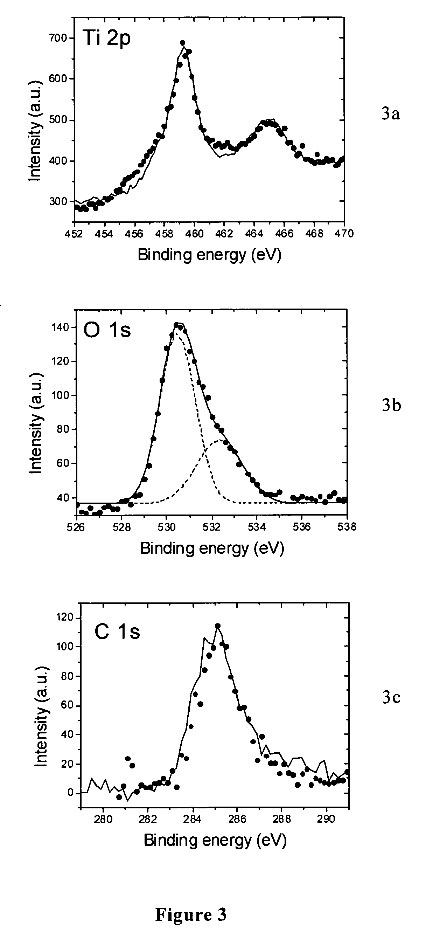

**Figure 3 a,** Comparison of XPS spectra at Ti 2p state energy. The peaks at 459 and 465 eV observed in each spectrum correspond to Ti 2p3/2 and Ti 2p1/2 states of stoichiometric TiO₂. Dotted spectrum is collected from quartz-supported annealed sample, while solid-line spectrum from silicon-supported as deposited sample. Electrostatic charging occurring on quartz has been kept into account (3.5 eV shift). **b**, XPS spectrum at O 1s state energy from quartz-supported annealed sample, after a 4.9 eV shift to compensate charging effects. The results of peak fitting procedure reveal two features: the 530.5 eV peak is related to stoichiometric oxide, while the second broad peak at 532.3 eV is related to the presence of hydroxyl group, adsorbed water, or organic species. **c**, Comparison of XPS spectra at C 1s state energy (dotted: quartz-supported annealed sample; solid-line: silicon-supported as deposited sample). A 4.4 eV shift has been introduced to compensate electrostatic charging.

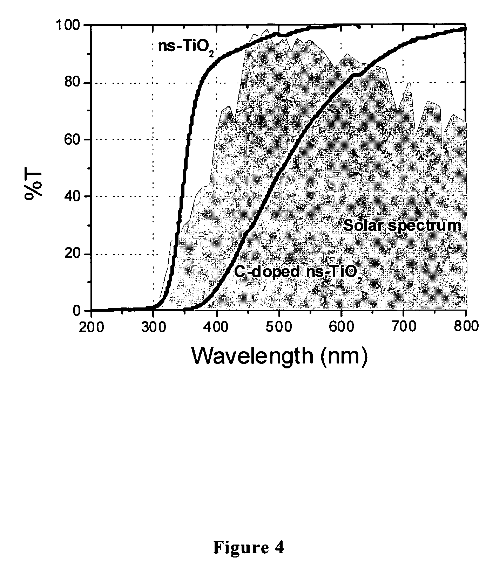

**Figure 4**. UV-Visible transmittance spectra of as deposited and C-doped ns-TiO₂. The solar spectrum at sea level is also reported showing that C-doped ns-TiO₂ films could absorb a considerable fraction of the solar photons, including those of emission maximum.

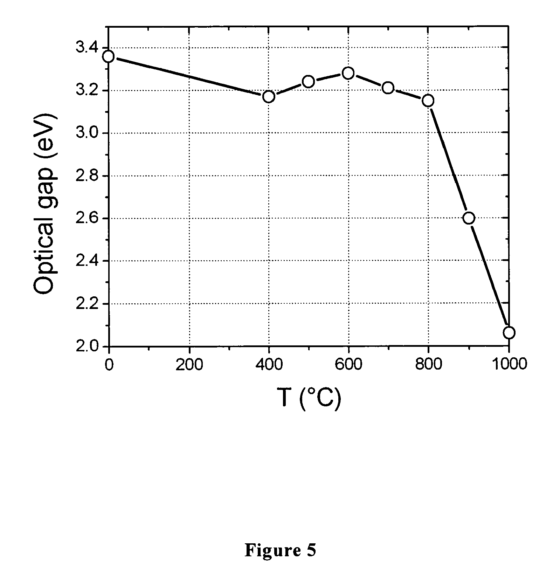

**Figure 5**. Optical gap versus annealing temperature. Up to 800°C the optical gap lies above 3 eV, nevertheless at 900°C it suddenly drops below 3 eV. This value is incompatible with pure TiO₂, indicating that electronic structure modification occurred due to doping. The subsequent step at 1000°C further reduces the gap to the value of 2.06 eV.

### Detailed description of the invention

According to the present invention, the nanostructured system is obtained by the assembling of nanoparticles. This implies two important consequences: *i)* under thermal annealing the grain growth is modest and the nanostructure is retained; *ii)* the rapid diffusion of C atoms present as contaminant in the atmosphere into titania nanocrystalline lattice is highly favoured.

The material is preferably in form of nanostructured films constituted by particles with diameter below 10 nm assembled in a porous structure with density in the range 2.4-2.8 g/cm³.

The materials of the invention may be obtained by thermal treatment of Titanium Dioxide, in a carbon-containing molecules atmosphere.

Titanium Dioxide is preferably obtained by means of supersonic cluster beam deposition using a pulsed microplasma cluster source, according to the method detailed below and using the apparatus disclosed in US 6,392,188.

Normally, the gas phase consists of air and the thermal treatment is preferably carried out at temperatures ranging from 900 to 1100°C, more preferably at about 1000°C.

The deposition of ns-TiO₂ by supersonic cluster beam deposition (SCBD) using a pulsed microplasma cluster source (PMCS), in high vacuum conditions has already been previously disclosed ¹⁵⁻¹⁸. Transmission electron microscopy and x-ray diffraction show that the as-deposited films consist of nanocrystals with size below 10 nm embedded in an amorphous matrix ^{17,18}.

Ultraviolet photoelectron spectroscopy (UPS) shows that the valence band of as deposited ns-TiO₂ films (Fig. 1) is characterized by states with energies between 3 and 9 eV respect to the Fermi level (EF). In this range, the peak at about 6 eV and the peak at 8 eV correspond to π (nonbonding) and σ (bonding) O 2p orbital. A considerable presence of gap states at 0.8 eV below the EF is observed. These states are related to Ti³⁺ point defects due to oxygen vacancies and they play a crucial role as surface chemisorption sites, since they can favour the high-temperature dissociative absorption of several compounds by electron back-donation from surface Ti³⁺ into a π* orbital of the molecules ¹⁹⁻²¹.

The large porosity and the presence of chemisorption sites suggest that an annealing in air can favour the uptake of carbon containing molecules (CO, CO₂, hydrocarbons) present as atmosphere contaminants. These species can act as carbon feedstock for carbothermal reduction of ns-TiO₂, during annealing at temperatures of 900-1100°C.

The chemical composition of annealed ns-TiO₂ films has been characterized by X-ray photoelectron spectroscopy (XPS). Before measurements samples underwent a severe surface cleaning procedure by argon ion sputtering, in order to remove chemisorbed species. The wide-scan spectrum reported in Fig. 2 indicates the presence of titanium, oxygen and carbon only. Within the sensitivity of the apparatus no contribution was observed from nitrogen, nor from any other element. XPS measurements have been carried out on quartz-supported annealed samples (the same used for optical absorption measurements), and for comparison on silicon-supported as deposited samples, in order to take into account charging effects.

The XPS spectra at Ti 2p state energy (Fig. 3a) show two main peaks at 459 and 465 eV corresponding to Ti 2p3/2 and Ti 2p1/2 states of stoichiometric TiO₂. The spectrum of the quartz-supported annealed sample (dotted) is compared with the spectrum of silicon-supported as deposited sample (solid line). Dotted spectrum has been normalized to the high energy tail and Ti 2p1/2 feature of spectrum from silicon-supported sample, and it has been shifted by 3.5 eV to compensate the effect of electrostatic charging occurring on quartz. This leads to an overall superposition of the spectra.

Fig. 3b shows the photoelectron spectrum of O 1s state, collected from quartz-supported annealed sample. The spectrum is characterized by two components, as revealed by peak fitting: the main peak at 530.5 eV is related to oxygen into stoichiometric oxide, while the second broad peak at 532.3 eV to other compounds, such as hydroxyl group, adsorbed water, organic species²⁰.

The photoelectron spectrum of C 1s state is characterized by a peak centred at about 285 eV (Fig. 3c). As for Ti 2p, the spectrum from quartz-supported annealed sample (dotted) is compared with the spectrum of silicon-supported as deposited sample (solid line). Dotted spectrum has been normalized to solid line spectrum and shifted by 4.4 eV.

The percentage of oxygen related to the oxide specie is 42%, oxygen from other species is 21%, titanium is 20% and carbon is 17%. From noise amplitude at 281 eV, that is the energy of C 1s state in Ti-C^{22,23}, the amount of Ti-bonded carbon could be evaluated below 20% of total carbon, corresponding to less than 5.4% of the TiO₂ fraction of the sample.

The optical response of the samples has been studied by UV-visible spectroscopy measurements (Fig. 4). The radiation absorption of the as-deposited samples is characterized by the onset of absorption at around 380 nm, while the annealed samples show a shift of the absorption edge towards visible wavelengths, with the onset of absorption at around 630 nm²⁴.

Following the Tauc approach²⁵, from these data we have found an optical gap (E_{g}) of 3.36 eV in the as-deposited samples, in agreement with the observation for amorphous TiO₂⁹. The annealed samples showed a E_{g} of 2.06 eV. The optical properties are uniform on the whole surface of the annealed film.

The role of carbothermal doping of ns-TiO₂ as the mechanism causing the gap narrowing is supported by the study of the evolution of E_{g} as a function of the annealing temperature. Different samples have been annealed for 4h at temperatures between 400 and 1000°C, with steps of 100°C. Measurements of the UV-visible transmittance and subsequent calculations of E_{g} have been carried out at each annealing step (Fig. 5). Up to 800°C small changes of E_{g} occur, probably due to phase modification, but still its value remains above 3 eV. At 900°C suddenly E_{g} drops below 3 eV indicating that the carbon diffusion and doping is taking place. The subsequent step at 1000°C further reduces E_{g} to the final value of 2.06 eV.

In order to confirm that the use of a nanostructured film is the enabling factor of this doping process, we carried out the same experiment with a TiO₂ film grown by reactive radio frequency (RF) sputtering. In this case the as-deposited film has the same stoichiometry of the nanostructured one but a compact structure. Following the identical thermal treatment as for the ns-TiO₂ film, we observed no reduction of the optical gap below 3 eV. XPS spectra, after argon ion beam etching, clearly demonstrate the absence of any carbon content. In this sputtered film the chemisorption of dopant species is limited to the topmost surface by the film microstructure.

The present invention provides a method allowing the preparation of nanostructured titania films with an optical band gap below 2.1 eV by using cluster-assembled TiO₂ as starting material using a straightforward and cheap thermal annealing in air. The unique features of nanocrystalline films obtained by assembling nanoparticles favour the incorporation of carbon-based contaminants present in air and the carbothermal reduction at high temperature.

The present invention shows that simple processing routes not effective for microcrystalline or amorphous materials can successfully be applied to nanostructured systems to obtain new functional and structural properties. This aspect should be carefully considered when comparing costs and benefits of traditional thin film deposition methods with nanoparticle assembling approaches.

The materials so obtained may be used in a variety of applications, particularly as photocatalysts, solar energy conversion devices, gas sensors. The following example provides a more detailed description of the invention.

### Example

Nanostructured TiO₂ films have been deposited by a Supersonic Cluster Beam Deposition (SCBD) apparatus equipped with a Pulsed Microplasma Cluster Source (PMCS)¹⁸⁻²¹. Briefly, a titanium target is sputtered by a confined plasma jet of an inert gas (He or Ar). Sputtered Ti atoms thermalize within the inert gas and condense to form clusters. The mixture of clusters and inert gas is then extracted in vacuum through a nozzle to form a seeded supersonic beam which is collected on a substrate located in the beam trajectory. The clusters kinetic energy is low enough to avoid fragmentation and hence a nanostructured film is grown. The mass distribution of the clusters can be controlled in order to tailor the nanostructure of the film.

Amorphous TiO₂ compact films were obtained by RF sputtering using a Leybold A550VZK apparatus. A titanium target was sputtered by argon ions at energy of 1.5 KeV, at a background pressure of 6·10⁻⁵ mbar.

Spectroscopic-grade quartz has been used as substrate in view of UV-visible transmittance measurements. Samples for UPS and XPS measurements have been deposited on silicon substrates since quartz suffers electrical charging problems. Nevertheless the XPS only is meaningful also from quartz-supported substrate, provided the opportune shift on the energy scale to compensate the electrostatic charging.

Annealing was carried out in air into a joule furnace for 4 hours; the temperature was monitored with a K-type thermocouple. Samples were kept separated from furnace walls by ceramic spacers. An uncoated quartz substrate was treated at the same time to investigate if some changing in this material occurred. It turned out that the thermal treatment does not cause any alteration in the substrate optical properties.

UPS and XPS have been performed in a UHV analysis chamber (base pressure <1·10⁻⁸ mbar) equipped with an electrostatic hemispherical analyser (EHA). An Mg-anode source (1253.6 eV) has been used for XPS, while He I (21.2 eV) and He II (40.8 eV) resonance lines have been utilized for UPS. The overall energy resolution was about 1 eV in XPS and 0.1 eV in UPS. The Fermi level has been identified by UPS measurement on a metallic sample.

UV-visible transmittance measurements have been obtained with a Spectrophotometer JASCO 7850, while the values of optical gap have been extracted from transmittance measurements according with Tauc model²⁵.

### References

1. Siegel, R. W. Nanophase materials: Synthesis, structure, and properties, in Fujita, F. E., (ed.) Physics of New Materials, Springer Series in Materials Science, Springer Berlin (1998).
2. Gas-sensing Materials, MRS Bull., 24, No. 6, (1999).
3. Fujishima, A. & Honda, K. Electrochemical photolysis of water at a semiconductor electrode. Nature 238, 37-38 (1972).
4. Linsebigler, A. L., Lu, G. & Yates Jr., J. T. Photocatalysis on TiO₂ surfaces: principles, mechanisms, and selected results. Chem. Rev. 95, 735-758 (1995).
5. Fujishima, A., Rao, T. N., Tryk, D. A. Titanium dioxide photocatalysis. J. Photochem. Photobiol. C1, 1-21 (2000).
6. Keith, D. W. & Farrell, A.E. Rethinking hydrogen cars. Science 301, 315 (2003).
7. Gratzel, M. Photoelectrochemical cells. Nature 414, 338-344 (2001).
8. Granqvist, C.G. Solar energy materials. Adv. Mater. 15, 1789-1803 (2003).
9. Bendavid, A., Martin, P. J., Jamting, A. & Takikawa, H. Structural and optical properties of titanium oxide thin films deposited by filtered arc deposition. Thin Solid Films 355-356, 6-11 (1999).
10. Carotta, M. C., Ferroni, M., Guidi, V. & Martinelli, G. Preparation and characterization of nanostructured titania thick films. Adv. Mater. 11, 943-946 (1999).
11. Anpo, M., Takeuchi, M., Ikeue, K. & Dhshi, S. Design and development of titanium oxide photocalysts operating under visible and UV light irradiation. Curr. Op. Solid St. Mater. Sci. 6, 381-388 (2002).
12. Umebayashi, T. et al. Sulfur-doping of rutile-titanium dioxide by ion implantation: photocurrent spectroscopy and first-principles band calculation studies. J. Appl. Phys. 93, 5156-5160 (2003).
13. Asahi, R., Morikawa, T., Ohwaki, T., Aoki, K. & Taga, Y. Visible-light photocatalysis in nitrogen-doped titanium oxides. Science 293, 269-271 (2001).
14. Khan, S. U. M., Al-Shahry, M. & Ingler Jr., W. B. Efficient photochemical water splitting by a chemically modified n-TiO₂. Science 297, 2243-2245 (2002).
15. Barborini, E., Piseri, P. & Milani, P. A pulsed microplasma source of high intensity supersonic carbon cluster beams. J. Phys. D: Appl. Phys. 32, L105-L109 (1999).
16. Piseri, P., Podestà, A., Barborini, E., & Milani, P. Production and characterization of highly intense and collimated cluster beams by inertial focusing in supersonic expansions. Rev. Sci Instrum. 72, 2261-2267 (2001).
17. Barborini, E. et al. Engineering the nanocrystalline structure of TiO₂ films by aerodynamically filtered cluster deposition. Appl. Phys. Lett. 81, 3052-3054 (2002).
18. Barborini, E. et al. Supersonic cluster beam deposition of nanostructured titania. Eur. Phys. J. D 24, 277-282 (2003).
19. Zhang, Z., Jeng, S. & Henrich, V. E. Cation-ligand hybridisation for stoichiometric and reduced TiO₂ (110) surfaces determined by resonant photoemission. Phys. Rev. B 43, 12004-12010 (1991).
20. Sanjines, R. et al. Electronic structure of anatase TiO₂ oxide. J. Appl. Phys. 75, 2945-2952 (1994).
21. Thomas, A. G. et al. Resonant photoemission of anatase TiO₂ (101) and (001) single crystals. Phys. Rev. B 67, 0351101-0351107 (2003).
22. Schuler, A., Gampp, R. & Oelhafen, P. In situ photoelectron spectroscopy of titanium-containing amorphous hydrogenated carbon films. Phys. Rev. B 60, 16164-16169 (1999).
23. Baba, K. & Hatada, R. Synthesis and properties of TiO₂ thin films by plasma source ion implantation. Surf. and Coat. Technol. 136, 241-243 (2001).
24. These values correspond to the wavelength where the extrapolated linear behaviour of absorption edge intersects T=100%.
25. Tauc, J. (ed.). Amorphous and Liquid Semiconductors. Plenum Press, London (1977).

## Claims

1. A Titanium Dioxide material **characterized by** an optical gap lower than 2.1 eV.

2. A material according to claim 1 wherein the Titanium Dioxide is doped exclusively with Carbon atoms.

3. A material according to claims 1 or 2 wherein the material is in form of nanostructured films constituted by particles with diameter below 10 nm assembled in a porous structure with density in the range 2.4-2.8 g/cm³.

4. A material according to any one of claims from 1 to 3, obtainable by thermal treatment of Titanium Dioxide, in a carbon-containing molecules atmosphere.

5. A material according to claim 4, wherein the Titanium Dioxide is obtained by means of supersonic cluster beam deposition using a pulsed microplasma cluster source.

6. A material according to claim 4 or 5 wherein the gas phase consists of air.

7. A material according to any one of claims from 4 to 6, wherein the thermal treatment is carried out at temperatures ranging from 900 to 1100°C.

8. A process for the preparation of the Titanium Dioxide material of claims 1-7, which comprises subjecting to thermal treatment Titanium Dioxide in a carbon-containing molecules atmosphere.

9. A process according to claim 8 wherein the gas phase consists of air.

10. A process according to claim 8 or 9 wherein the thermal treatment is carried out at temperatures ranging from 900 to 1100°C.

11. A process according to claim 8, 9 or 10 wherein the Titanium Dioxide is obtained by means of supersonic cluster beam deposition using a pulsed microplasma cluster source.

12. Photocatalysts comprising the material of claims 1-6.
